# EUROPEAN PATENT APPLICATION

(11) **EP 1 202 494 A2**
(43) Date of publication of application: **02.05.2002**
(21) Application number: 01125899.3
(22) Date of filing: 30.10.2001
(51) Int. Cl.: H04L 12/28, H04L 29/06

(54) **Method and system for remotely maintaining and provisioning equipment over a wide area network**

(30) Priority: 31.10.2000 US 703069
(71) Applicant: Marconi Communications, Inc., Cleveland, OH 44124 (US)
(72) Inventor: Slaten, David M., Colleyville, Texas (US); Adcox, Timothy D., Ponder, Texas (US)
(74) Representative: Winter, Brandl, Fürniss, Hübner, Röss, Kaiser, Polte Partnerschaft

(57) **Abstract**

The present invention relates to a method and system for managing, provisioning and troubleshooting remote customer located equipment. The system includes a customer located network interface device which provides broadband data media or multi media connections to a customer. The network interface device may take the form of a network switch, router, fiber to the home network unit or the like. The network interface device monitors data media for data packets address to the device. In one embodiment the device routes data packets that are IP-addressed to the network interface device. In another embodiment the device captures packets based on the destination Ethernet type, those packets wrapped in the Ethernet type of the network interface device are captured, while packets wrapped in the customer's Ethernet type are passed to a media output port for the customer. In one embodiment the network interface device further contains one or more media switches connected to various media ports along with control and status logic for operating the media switches. Data packets that are destined for the network interface device may contain control and status requests for operating and monitoring the state of the individual switches. The service provider communicates with the device over a WAN, such as the Internet, using a common web browser. Individual network interface devices are uniquely addressable from the browser and security is enhanced between the device and service provider by encrypting the data packets. A service provider is thus able to remotely manage provision and troubleshoot the network interface device even when physically inaccessible while located at a customer site.

## Description

### BACKGROUND OF THE INVENTION

### 1. Field Of The Invention

The present invention relates generally to the field of broadband multi-media communication systems. More specifically, the invention is a system and method for managing, provisioning and troubleshooting customer located equipment.

### 2. Description Of Related Art

Broadband and multimedia service providers are in the business of providing access to a service or groups of services for a fee, usually a monthly fee, but unit fees are not uncommon. For the charge, the service provider authorizes a customer for a service. Until relatively recently, most service providers specialized in only one service, i.e. telephone, Internet access, cable television programming, etc., possibly due to delivery expense resulting from limited bandwidth media, dissimilar transmission media and incompatible delivery protocols. The individual services were piped to a customer's business or residence on a separate transmission media including coaxial cable or twisted pair wires. While it was always possible for a provider to cover the ground with more than one type of transmission media, thereby selling multiple services to a customer, the customer was always faced with the problems associated with multiple interfaces. Even in cases where a single transmission media accessed multiple services, such as telephone service and Internet from the same twisted pair wires, the transmission protocols were often incompatible forcing the customer to subscribe to multiple sets of media and two telephone lines.

With the proliferation of broadband technologies, service providers now have at their disposal the means to bundle services on a single transmission media without conflict. The most popular of which is bundling broadband Internet service with either telephone service, on twisted pair wires, or cable television programming on coaxial cable. However, while in both of these cases the customer is freed from porting to multiple transmission medias, generally the customer is still faced with accessing multiple interfaces, one for each service. Here, an interface can be any number of devices used by the customer to connect to a service, for example, dial-up modems, high speed modems, digital subscriber line (DSL), high speed switches, routers and a variety of set-top boxes for provisioning television, telephone and Internet services. Many times the service provider has the responsibility for maintaining and troubleshooting these interfaces in addition to provisioning services to the customer.

Troubleshooting usually entails the service provider sending a technician to the customer's site to ascertain the complaint and investigate any problems with the interface. Very often the interface is owned by the service provider and leased, with the service, to the customer. Even in the best situations where problems can be resolved telephonically, it requires a frustrated customer to describe the problem to the services provider's technical support representative. The cause of the customer's problem may be located in the service provider's equipment, the customer's equipment or both. The support person must try to understand the problem as described by the customer, and then take corrective measures from the help site. Then, based on the customer's assessment of the repair attempt, the support person attempts other solutions until the problem has been solved or localized at the customer's equipment. If the problem cannot be corrected telephonically, the service person writes a service request for onsite maintenance of the customer located equipment. A mobile service representative then schedules an appointment with the customer, at which time the diagnostic procedures performed by the help desk representative are recreated at the customer's site.

### SUMMARY OF THE INVENTION

The present invention relates to a method and system for managing, provisioning and troubleshooting remote customer located equipment. The system includes a customer located network interface device which provides broadband data media or multi media connections to a customer. The network interface device may take the form of a network switch, router, fiber to the home network unit or the like. The network interface device monitors data media for data packets address to the device. In one embodiment the device routes data packets that are IP-addressed to the network interface device. In another embodiment the device captures packets based on the destination Ethernet type, those packets wrapped in the Ethernet type of the network interface device are captured, while packets wrapped in the customer's Ethernet type are passed to a media output port for the customer. In one embodiment the network interface device further contains one or more media switches connected to various media ports along with control and status logic for operating the media switches. Data packets that are destined for the network interface device may contain control and status requests for operating and monitoring the state of the individual switches. The service provider communicates with the device over a WAN, such as the Internet, using a common web browser. Individual network interface devices are uniquely addressable from the browser and security is enhanced between the device and service provider by encrypting the data packets. A service provider is thus able to remotely manage provision and troubleshoot the network interface device even when physically inaccessible while located at a customer site.

### BRIEF DESCRIPTION OF THE DRAWINGS

The novel features believed characteristic of the invention are set forth in the appended claims. The invention itself, however, as well as an exemplary mode of use, further objectives and advantages thereof, will best be understood by reference to the following detailed description of an illustrative embodiment when read in conjunction with the accompanying drawings, wherein:
The present invention is illustrated by way of example, and not by way of limitation, in the figures of the accompanying drawings and in which like reference numerals indicate similar elements and in which:
   **FIG. 1** is a diagram of a network illustrating various interconnected network devices such as routers, hubs and network switches in which the present invention may be implemented;
   **FIG. 2A** illustrates a simplified routing or forwarding table;
   **FIG. 2B** is an illustration depicting a provisionable routing table for remotely provisioning customers from a WAN connection in accordance with an exemplary embodiment of the present invention;
   **FIG. 3** is a flowchart depicting a process for packet handling by a provisionable router in accordance with an exemplary embodiment of the present invention;
   **FIG. 4** is a diagram that sets forth an exemplary embodiment of FTTH (fiber to the home) system in which the present invention may be implemented;
   **FIG. 5** is a diagram of an HNU which has been modified by adding a provisionable router in accordance with an exemplary embodiment of the present invention;
   **FIG. 6** is a flowchart depicting packet handling by a remote provisioning HNU is illustrated in accordance with an exemplary embodiment of the present invention;
   **FIG. 7** is a diagram depicting an HNU utilizing an addressable network switch for processing provisioning and status requests in accordance with an exemplary embodiment of the present invention; and
   **FIG. 8** is a flowchart depicting a process for processing data packets in an HNU in accordance with an exemplary embodiment of the present invention.

Other features of the present invention will be apparent from the accompanying drawings and from the detailed description which follows.

### DETAILED DESCRIPTION OF THE INVENTION

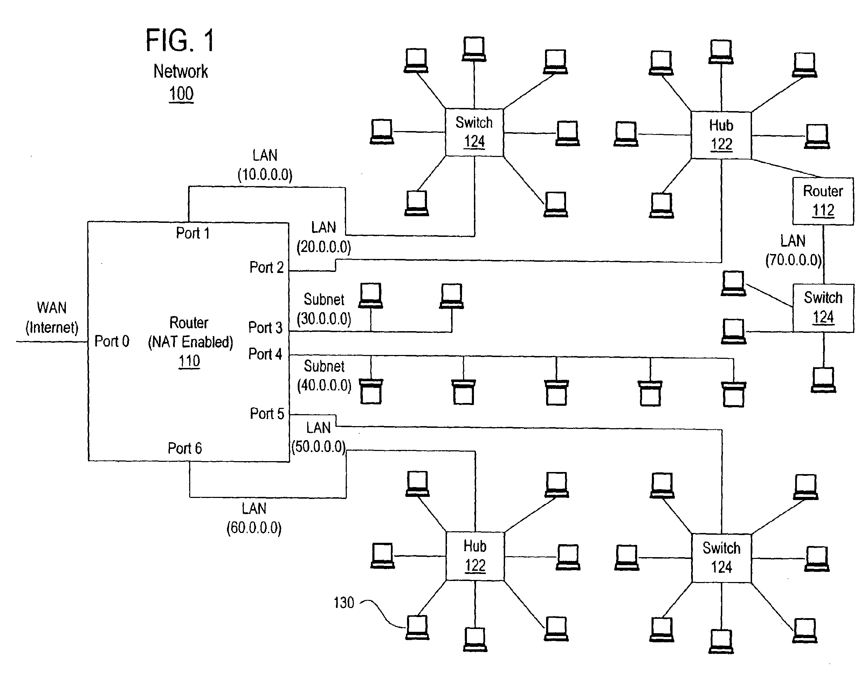

With respect to **FIG. 1,** a network is depicted which illustrates various interconnected network devices such as routers, hubs and network switches in which the present invention may be implemented. In the depicted figure, network **100** is a diagram illustrating a connection between a WAN (wide area network) such as the Internet, to a plurality of LANs (local area networks) and subnets for transmitting information packets to individual clients serviced by the various LANs and subnets. Here, router **110** provides a means for routing packets from the WAN to the various LANs and sub-nets in network **100**.

According to the traditional definition of a router, a router is a device that forwards data packets from one local area network (LAN) or wide area network (WAN) to another. Based on routing tables and routing protocols, a router inspects only the network portion (netid or network address) of the address and directs incoming datagrams (data frames or data packets) to the appropriate outgoing router port. The routing protocol used by the router is a set of hardware and software standards that govern functionality of and between routers. Routing protocols are used by a router to determine the next node to transfer a data packet based on the best path to forward the packet toward its final destination. Using the routing protocol, the router compares the network address in each transmitted datagram to a routing table (or forwarding table) and decides which node to send the datagram based on the most expedient route (traffic load, line costs, speed, bad lines, etc.). Each node-to-node transfer along a network is called a "hop," and must be either the destination network or another router. Additionally, a routing protocol also specifies how routers report changes and share information with other routers reachable in a network. This information is used to populate routing tables. Routing protocol dynamically adjusts routing decisions based on changing conditions. Well known routing protocols include RIP (routing information protocol), OSPF (open shortest path first), IGRP (interior gateway routing protocol), EGP (exterior gateway protocol) and BGP (border gateway protocol).

Traditionally, routers function at the network/IP layer or OSI (open system interconnection) layer 3 of the communications protocol stack or suite. A communications protocol is a set of hardware and software standards that govern transmission between two communications devices. A protocol stack may consist of several layers, or levels of protocol functionality. Table I below lists some major communications protocol and the corresponding OSI layer in which a protocol functions. Protocols in parentheses are the protocol stack to which a protocol belongs.

**Table I**

| OSI Layer | Protocol |
|---|---|
| 1 | RS-232 V.35 SONET |
| 1-2 | 802.11 wireless Bluetooth wireless |
| 2 | Ethernet Fast Ethernet Gigabit Ethernet Token Ring FDDI ATM |
| 3 | IP (TCP/IP) IPX (NetWare) |
| 4 | SPX (NetWare) TCP (TCP/IP) UDP (TCP/IP) NetBEUI (NetBIOS) |
| 5 | NetBIOS |
| 6 | ASN.1 |
| 7 | SMB (NetBEUI) AFP (AppleTalk) NCP (NetWare) NFS (TCP/IP) HTTP (TCP/IP) FTP (TCP/IP) SMTP (TCP/IP) DNS (TCP/IP) |

TCP/IP (transmission control protocol/internet protocol) is an example of a major protocol which provides the fundamental transport for the Internet and UNIX systems. HTTP (hypertext transport protocol), FTP (file transfer protocol), SMTP (simple mail transfer protocol) and others are related protocols. The Internet uses TCP/IP, HTTP, FTP and SMTP protocols. LANs, mostly Ethernet, but also Token Ring and FDDI (fiber distributed data interface), provide the access method (layers 1 and 2) that moves packets from one physical station to another. Higher layer protocols, such as TCP/IP, SPX/IPX (sequenced packet exchange/internetwork packet exchange) and NetBIOS/NetBEUI, are used in layers 3, 4 and 5 of the protocol stack to control and route the transmission. The precise model of the protocol stack is unimportant for the description herein, however it should be recognized that network devices have been traditionally designed to work in a particular layer or range of layers. The present invention may be implemented in a variety of communications protocols which are well known in the art, such as TCP/IP, SNA (systems network architecture) and OSI, or may instead be implemented in any other communications protocol.

Conventionally, routers such as routers **110** and **112** have been used to segment LANs in order to balance traffic within workgroups and/or to filter traffic for security purposes and policy management. Routers are also used extensively at the edge of a network to connect remote sites to the network as shown by the position of router **110** in network **100.** Routers can, however, only route a message that is transmitted by a routable protocol such as IP or IPX. Messages in non-routable protocols, such as NetBIOS and LAT, cannot be routed, but they can be transferred from LAN to LAN via a bridge (a device that connects two LAN segments together, which may be of similar or dissimilar LAN types). However, all routable protocols are not standardized so many modern routers (multiprotocol routers) support multiple non-standardized, communications protocols.

As will be described in greater detail below, router **110** maintains a list of all LANs and subnets that are accessible from any port on router **110.** For example, with respect to **FIG. 1,** the WAN (or Internet) is ported directly to Port 0; LAN 10.0.0.0 is ported directly to Port 1; LAN 20.0.0.0 is ported directly to Port 2; subnet 30.0.0.0 is ported directly to Port 3; subnet 40.0.0.0 is ported directly to Port 4; LAN 50.0.0.0 is ported directly to Port 5; and LAN 60.0.0.0 is ported directly to Port 6. Each LAN connects a router, such as router **110,** to a LAN connection device. A LAN connection device connects a plurality of client devices to a LAN and distributes data packets from a router to individual client devices. In network **110,** hubs **122** and network switches **124** are LAN connection devices.

A hub is a central connecting device in a network that joins communications lines together in a star configuration. Devices attached to a hub's port share the available bandwidth between themselves. Passive hubs are dumb devices that merely connect devices without adding anything to the data passing through them. Active hubs, or "multiport repeaters," regenerate the data bits in order to maintain a strong signal, and intelligent hubs provide added functionality. Multiple media hubs interconnect different types of Ethernets (twisted pair, coax and optical fiber) and can bridge between Ethernet, Token Ring, FDDI and ATM (asynchronous transfer mode) topologies. Switching hubs provide Ethernet and ATM switching. Recently, hubs have become very intelligent, modular and customizable, allowing for the insertion of non-traditional hub functionality, such as bridging, routing and switching modules all within the same unit.

A network switch (also called a frame or LAN switch) is a network device that cross connects physical stations or LAN segments. Recently, network switches are increasingly replacing shared media hubs in order to increase bandwidth. In so doing, each port on the switch can give full bandwidth to a single server or client station.

Hubs and network switches both work at data link or machine (or media) access control (MAC) layer (or layer 2 of the OSI protocol stack), while routers traditionally operate in network or IP layer (layer 3 of the OSI protocol) of the protocol stack. Routers add significantly more overhead to a network than either a network switch or hub because a router must inspect the network address in the protocol stack. Additionally, a router has the task of preparing data packets for use in the next lower protocol layer which requires still more overhead. Hops between a LAN and a WAN necessitate converting data packets to correspond with the protocol layer used by the network. For example, if, in a TCP/IP protocol network, an IP packet originates in an Ethernet LAN, is routed to a WAN and then routed back to a second Ethernet LAN, a router must first convert the Ethernet frames to WAN frames and then a router must convert the WAN frames back to Ethernet frames.

Returning to **FIG. 1**, notice that more than one LAN may be accessible from a given port. For example, LAN 20.0.0.0 is accessible directly via Port 2 and thus each of the clients attached to hub **122** may receive information packets over LAN 20.0.0.0 but further, LAN 70.0.0.0 is connected to hub **122** through router **112** on Port 2. Each of the clients attached to switch **124** that is connected to LAN 70.0.0.0 may also receive information packets via Port 2. The primary function of router **110** is to hop data packets to a target node in the most expeditious manner. A target node may or may not be the final destination node. Referring again to LAN 70.0.0.0, router **110** cannot directly route a packet to LAN 70.0.0.0, instead, router 110 must route packets to an intermediate node, hub **122,** which then distributes the information to router **112.** Router **112** then, in turn, routes packets directly to LAN 70.0.0.0 where they are received by switch **124** and connected to individual clients based on the client's MAC address. Prior to routing the data packets to switch **124,** router **112** converts the IP address (network layer protocol) in the data packet to a MAC address (MAC layer protocol).

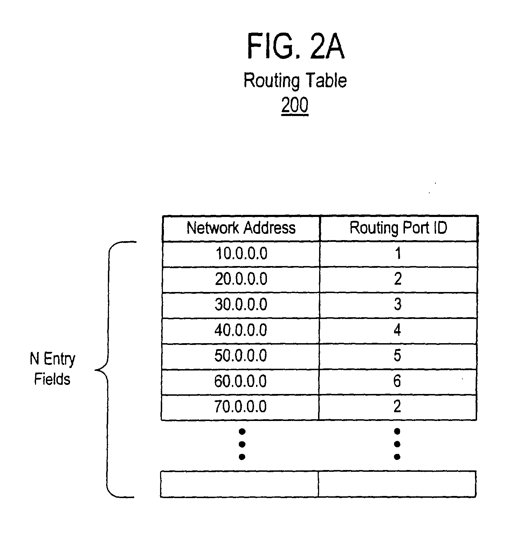

A router such as Router **110** routes only packets which can reach a final destination node or at least an intermediate node based on the address information found in the packets header. In order to perform the routing function, routers such as router **110** maintain a list of routing destinations or networks or network nodes associated with a router port which has access to that node. **FIG. 2A** illustrates such a routing or forwarding table. Routing table **200** is a simplistic representation of a actual routing table that might be maintained by router **110** in network **100** of **FIG. 1.** One well skilled in the art would realize that this is a greatly simplified version of a routing table. In this embodiment, routing table **200** has n entry fields for holding network addresses and respective corresponding routing ports. In this simplified view, if router **110** received a data packet addressed to network 70.0.0.0, the router logic would access routing table **200** for the network and find the associated routing port, in this case, Port 2. Again, as discussed above, the most effective routing tables are dynamic, constantly being updated by the routing protocol based on current network conditions.

One problem facing modern Internet Service Providers (ISPs) is the temptation for the ISP's customers to redistribute the media between multiple potential customers. For example, in the case of an apartment complex, hotel or office suite, a customer may obtain media service connection such as a T1 or DSL (Digital Service Line) connection and then redistribute the media proximately located users. In the past, the ISP provider regulated the number of connections to a WAN, such as the Internet, by imposing a limit of one machine per connection. This practice was easily enforced due to the limited bandwidth provided to customers using dial-up connections. That is, in using a dial-up connection, the transfer rate was sufficiently low as to restrict access to the WAN to an individual machine.

However, with the proliferation of higher speed media connections such as DSL and T1 connections, customers realized that the majority of the bandwidth goes wasted at any one time. Thus, savvy customers added multiple devices to the single ISP's connection without incurring additional charges to the ISP. Many times the users of these devices were potential customers for the ISP. By sharing a media connection, customers deprive the ISP of revenue realized by selling media service to potential customers who are now sharing a single media connection.

DSL service providers have been reasonably successful in reducing bandwidth sharing by providing each subscriber with a single ported DSL modem having a single IP address. A DSL is customer located equipment (CLE). Thus, a customer can only connect one machine to the DSL modem. This type of provisioning scheme operates in the network layer by restricting access based on IP addresses. Normally, provisioning is performed at the ISP's site. DSL service providers would, of course, supply the customer with additional IP addresses for an additional monthly fee, thus allowing the customer to connect several machines to a single DSL media connection. However, customers were easily able to circumvent the additional fee by independently acquiring an additional IP address (depending on the DSL connection type, an additional DSL modem might also be needed). More recently, DSL routers have become available which utilize a single-network layer IP address and route data directly to individual machines using the machine's MAC address. In most cases a DSL router has both routing and switching capabilities and can access thousands of separate MAC addresses.

In the case of sites that may be serviced by a single media connection and then distributed throughout the facility to individual subscribers, the above-mentioned DSL connection provisioning is rather cumbersome and expensive, especially in light of current router technologies. In a large facility having multiple users where the facility itself is the ISP's customer, the most efficient means for connecting a number of clients is via a plurality of LANs using a router. The router is then responsible for distributing the data packets to the individual networks and onto the final destination client. However, in the case of a facility having a large number of individual subscribers, provisioning ISP service through a router becomes a problem. As described above, the function of a router is to forward information packets to the proper network and not provisioning. Thus, in the case of a large facility such as an apartment complex, condominium complex or office suite, a DSL provider may still rely on individual DSL connections with DSL modems in each unit to provide service for an individual subscriber.

In accordance with an exemplary embodiment of the present invention, a service provider can restrict access to a service by providing a provisioning means in a router. The present invention utilizes a modified general purpose router, which is modified to provide a remote provisioning means for a service provider. The modification may be software, firmware or even hardware without varying from the intended scope of the present invention. As opposed to prior art methods of provisioning such as dispatching a service technician to a customer's site house to physically provision a device or make a physical connection, provisioning in accordance with an exemplary embodiment of the present invention is performed at remote location by modifying a router's routing table. Thus, with the present invention it is possible to customer locate a provisionable router which - better utilizes the available media bandwidth; is secure; and remotely provisionable by the media service provider.

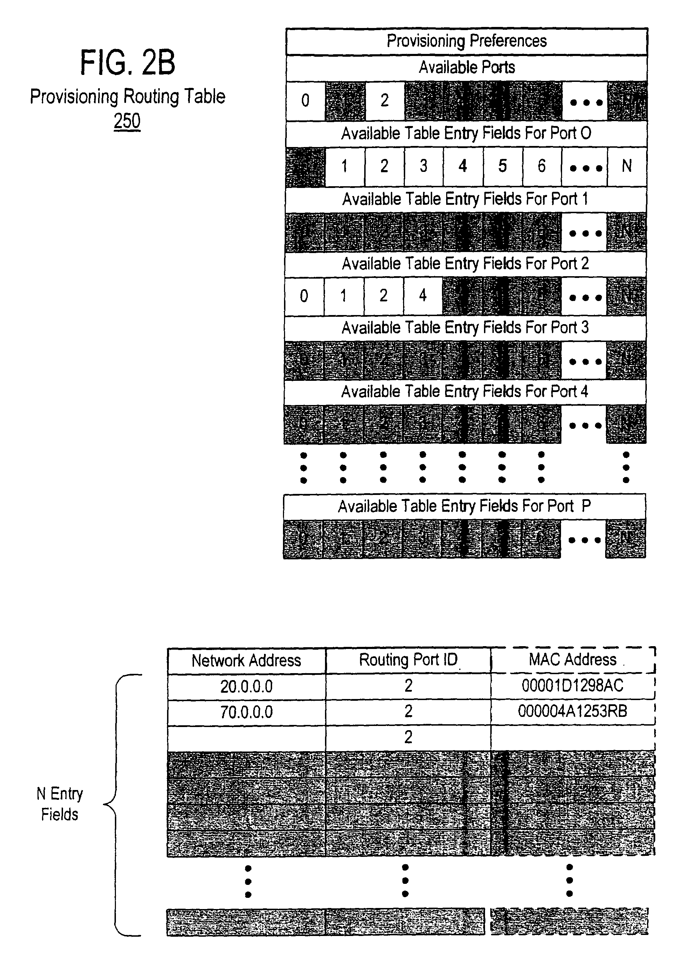

**FIG. 2B** is an illustration depicting provisionable routing table for remotely provisioning customers from a single WAN connection in accordance with an exemplary embodiment of the present invention. By practicing the present invention, multiple customers are individually provisioned to a single WAN connection utilizing a provisionable router rather than providing a plurality of separate connections to individual customers. Provisioning is accomplished by an ISP service provider remotely updating provisioning preferences in the provisionable router.

A provisionable router, such as routers **110** and **112** shown in **FIG. 1**, has a WAN-side port, Port 0 and at least one but more likely a plurality of LAN-side ports, Ports 1 to P. With respect to routing table **250,** note all ports, Ports 0 to P, are available for routing data. Port 0 is ported to the WAN or Internet so it is always active and Port 0 hop information is allowed to populate the entry fields in the routing table as determined by the routing protocol (routing protocols use a utility such as PING which causes all network devices reachable on a particular port to respond with their IP addresses). Ports 1 to P are reserved for the LAN connections and are provisioned based in provisioning preferences remotely transmitted to the router by the ISP. Routing table **250** has a maximum of N possible entry fields for storing hop information. In prior art dynamic routing tables all available entry fields were populated using a routing protocol. In accordance with the present invention, however, hop information from the routing protocol is filtered by provisioning preferences prior to entry in the routing table.

In contrast to prior art routing tables, the present invention limits access to the WAN from a LAN in one of two ways. First, by limiting the number of ports that are active, and second, by limiting the number of entry fields in router table which are active for a particular port. An ISP defines active ports and entry fields by setting provisioning preferences. In the depicted figure, note that of the available LAN ports, only Port 2 is not shaded and thus is active. Note also, of the available table entry fields for Port 2, only entries 0, 1 and 2 are not shaded and thus are active and available for hop information. The port and entry field preferences are provisioned from a remotely location by the ISP provider by temporarily using the using the customers media connection and bandwidth. Once the provisioning preferences have been set, a router cannot automatically enter hop information in its routing table. Instead, the router must first check the provisioning preferences to determine if the hop information from the routing protocol involves an active port and if so, if an open entry field exists associated with the entry port for the hop information. In the depicted example, only Port 2 is active. Note also that no matter how many networks are connected to Port 2, provisionable routing table **250** has only three active entry fields for the hop information. Therefore, if a customer were to connect multiple nodes to a single port of router **110** for instance, only three networks would be recognized on Port 2. Additionally, provisionable routing table **250** is used for routing protocol requests from other routers, thus other routers cannot identify hops to networks that are a part of the hop information in the routing table.

One skilled in the art would understand that populating a routing table is generally a network or IP layer function (layer 3 OSI protocol). As such, even though an ISP provider limits the customer to a maximum of three networks attached to a single port, each network may contain a plurality of individual devices, *i.e* computers, laptops or net applicants. Therefore, in accordance with a further refinement of the exemplary embodiment of the present invention, provisionable routing table **250** may also contain a MAC address column for each individual machine connected to an active port. In that case, the router performs a MAC or data link layer function normally preformed by a network switch. MAC addresses are populated into the routing table using a modified ARP (address resolution protocol) function. Normally a router ARP's a destination node with a device's IP address and the device returns its MAC address. The devices on a LAN in the present network may or may not have an IP address so the provisionable router ARP's all devices reachable on an active port for their MAC addresses. MAC addresses are then entered no the routing table based on active entry fields. The provisionable router opens each packet header and retrieves the destination IP (or network address) as in the prior art, but in accordance with the present invention, also checks the MAC address of the final destination device against the routing table. Packets that are sent to a node such as a network switch cannot pass though the provisionable router to the switch's address is listed in the provisionable routing table, the final destination device MAC address must also be entered in the table. The provisionable router may also intercept and respond to ARPs from other routers, based on the active MAC addresses in the routing table.

In accordance with this exemplary embodiment, the customer is limited by the number of MAC address entry fields in the routing table that are activated. Thus with respect to routing table **250**, the ISP has provision one port, Port 2, and three MAC address which may come from up to tree different LAN addresses. Therefore, again with respect to routing table **250**, only three final destination MAC addresses would be recognized by a provisioning router using routing table. In that case, regardless of the number of individual networks, machines or IP addresses for the individual networks and machines, only three MAC addresses would be recognized.

Further in accordance with an exemplary embodiment of the present invention routing table **250** is a dynamic routing table, that is, although the number of entry fields are limited by the service provider defined provisioning preferences, the value of each active entry (the identity of the network or MAC) is defined by the routing protocol. So while the service provide may limit the total number of entries or network devices listed on the routing table, the service provider does not constrain or define the physical devices to be supported by routing table **250**. Alternatively, and in accordance with another exemplary embodiment of the present invention, the routing table is a static routing table. That is, each entry field in the routing table must be entered, usually manually, but certain network devices have the ability to enter their addresses on a static routing table without the use for sophisticated routing protocols.

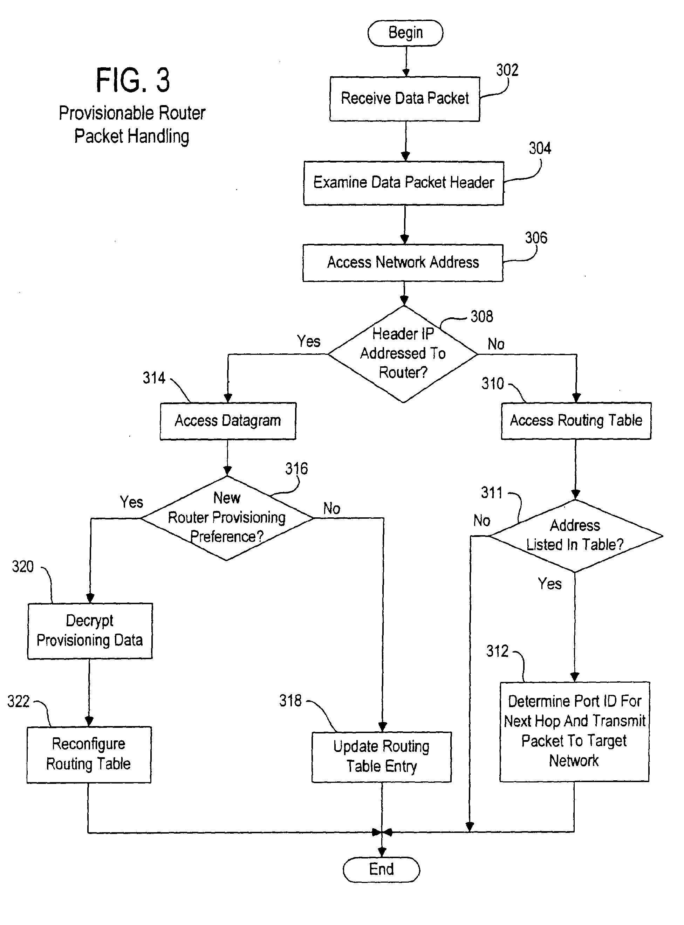

**FIG. 3** is a flowchart depicting a process for packet handling by a provisionable router in accordance with an exemplary embodiment of the present invention. The process begins with the router receiving a data packet (step **302**) and the router examines the data packet for the packet header (step **304**). The router then accesses the network address contained in the data packet, the network address identifies a destination, not necessarily the final destination, for the datagram (step **306**). The router then determines whether the IP address contained in the network address is the provisionable router's own address or some other address (step **308**). If it is determined that the IP address contained in the packet header is some address other than the router's, the router then accesses its provisioning routing table (step **310**). A check is made to determine if the address is listed in the provisioning router table (step **311**), if not the process ends. If the address is listed in the provisioning router table, then the router then determines the port ID for the next hob and transmits the data packet to the target network identified in the packet header (step **312**). The process for routing a data packet then ends.

Returning to step **308,** if the provisionable router is the target device designated by the IP address in the packet header, the provisionable router then accesses the information stored in the data packet (step **314**). As mentioned above, the router may receive two different types of information: routing information from connected routers and devices based on a routing protocol; or in accordance to an exemplary embodiment of the present invention, the datagram may also contain proprietary provisioning preference information. Therefore, the provisionable router must determine which type of packet it has received (step **316**). If the router has not received new provisioning preference information, then the information must be routing, or hop, information from other routers and network devices. The router accesses the information in the datagram and updates the hop information in the routing table with information provided to the provisionable router by the data packet (step **318**). The process then ends.

Returning to step **316**, if the datagram contains new router provisioning preferences, the contents of the datagram are encrypted to protect the proprietary provisioning information. The cryptography method may be any well known algorithm such as the Data Encryption Standard or Rivest-Shamir-Adleman forms for private key encryption, or any other secure cryptography method. Therefore, the new provisioning preference information must be decrypted prior to utilizing the provisioning data (step **320**). Then, based on the new provisioning data, the router reconfigures the routing table (step **322**). Reconfiguring the routing table involves activating and deactivating ports and/or table entry fields for network and MAC addresses. Once the provisioning preferences in the routing table have been reconfigured, the process ends.

The present invention is described above in terms of limiting access, or connections, to a single media such as a WAN or Internet. Provisioning is accomplished remotely, by utilizing the customer's media connection. The service provider temporarily expropriates media bandwidth for this purpose. However, the present invention is not limited to practice on a single media network device. Other devices that provided customers with multiple media connections are known. Immediately below is a description of system which makes use of one such device.

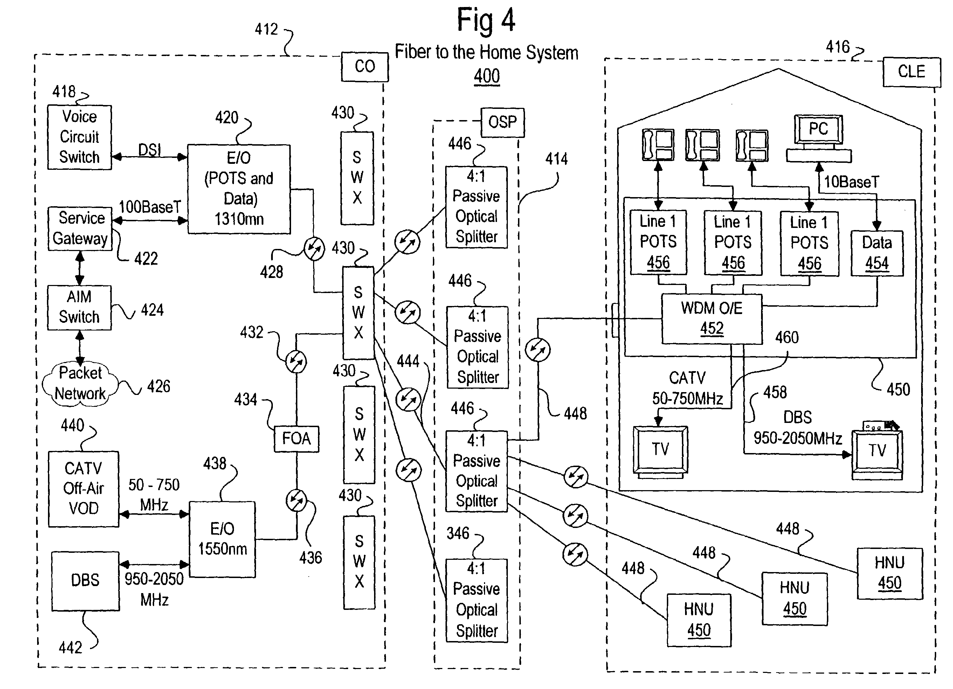

**FIG. 4** is a diagram that sets forth an exemplary embodiment of FTTH (fiber to the home) system in which the present invention may be implemented. Exemplary preferred multimedia services provided via system **400** are plain old telephone service (POTS), high-speed data and video. All three services are combined and distributed from central location **412**, assumed herein to be a central office (CO), and transmitted to customers over fiber optic network **414.** Resulting outside plant (OSP) **444, 446, 448** preferably contains no active components and thus is referred to as a passive optical network (PON). Passive optical splitter **446** terminates single fiber **444** in the distribution plant and feeds up to four customers.

FTTH system **400** is optimized for low initial first cost. Service costs are deferred until there is demand on a per customer basis. The initial first cost is driven by low OSP cost to place only the fiber cable in the network; either aerial or buried, with no intermediate cross connects. Once a customer requests service, drop fiber **448** is delivered to the individual home via splice **446** off of primary fiber cable **444.**

Delivery of services is CLE (customer located equipment) based **416.** A single, locally powered CLE HNU (home network unit) **450** provides voice, video and data services from fiber **448** entering the home. Once installed, the high bandwidth of the fiber network combined with the simplicity of CLE deployment allows for an increase (scalability) in CLE feature sets and accommodation of new services without requiring additional construction. This scalability advantage of the present invention is not possible with presently implemented access loop networks.

Central office equipment **412** (COE) preferably utilizes a Marconi® MX NGDLC (Next Generation Digital Loop Carrier) product (available from Marconi Communications, Irving, Texas) that provides network distribution, connectivity and control of broadband video and data plus telephony functionality, including a Telecordia certified GR-303 switch interface. Included with the NGDLC product is a unique Optical Mainframe for fiber management, optical multiplexing, and termination as well as an optical video distribution subsystem **438, 434, 430**. The FTTH system **400 c**an be deployed as an overlay in areas where there is a demand for voice, video and data services, as an alternative method for outside plant rehab, overlay, or in greenfield construction.

The equipment making up the exemplary FTTH system **400** shown in **FIG. 4** consists of the following elements: (1) HNU **450** is the CLE unit. HNU **450** is attached to fiber OSP **448** and provides voice, video and data services distributed by the DISC*S® MX Distribution shelf (MDS) **420** at the CO. HNU **450** preferably receives local power from an external power supply and an optional battery backup supply; (2) The DISC*S® NGDLC configured with the MX Distribution shelf (MDS) that supplies voice/video/data distribution cards that interface with the fiber OSP and with the upstream network switching elements; (3) The SWX Optical Mainframe **430**, which provides management of the distribution fibers from the HNUs, mass fusion splicing for termination into optical distribution equipment and wave division multiplexing; (4) The optical video distribution **438** consisting of fiber amplifiers and transmitters for broadcast of DBS **442** and CATV video **440**; (5) The broadband data aggregation equipment for transferring packet data to the ISP traffic transmission backbone **426**; and (6) element management systems (EMSs) **420** to provide operational control of the above items as required or appropriate.

### A. Outside Plant (OSP)

The OSP is optimized for aerial construction, although the architecture is applicable to buried construction as well. The OSP is constructed of fiber cables **444** extending from a central or remote switching location throughout the service area. Each fiber provides service preferably to four homes. The signals on the fibers are transmitted for distances up to 33 kft, without amplification, before termination at passive splitter **446.** The 4:1 splitter terminates fiber **448** in close proximity (3.3 kft or less) to four homes or living units. Single fiber drop **448** extends from the splitter **446** to each of the living units and terminates at the HNU **450.** Four way splitters **446**, fiber drops **448,** termination of the fiber drop and installation of the HNU **450** are added.to the system as service is required.

### B. Home Network Unit (HNU)

HNU **450** is located inside customer premise **416** and provides the following services: (i) 3 POTS lines **456;** (ii) 1 CATV drop (50-750MHz) **460;** (iii) 1 DBS drop (950-2050MHz) **458;** and (iv) 1 10Mbps Ethernet drop **454.** HNU **450** is locally powered via an external power supply co-located inside customer premise **416.** Lifeline POTS is supported by optional battery backup on a single POTS line. The battery backup consists of a unit external to HNU **450** that accepts commonly available "C" cell or 9 volt batteries.

HNU **50** is preferably mounted on a wall inside the living unit. The HNU housing is preferably a "clam shell" box with a hinged cover providing access to the circuit board and fiber loop inside the unit. A lock is provided to prevent unauthorized entry to the HNU.

Fiber drop cable **448,** including an optional metallic strength member, enters HNU **450** housing. The mechanical termination of fiber cable **448** and optional strength member is provided as an integral part of HNU **450** housing. Fiber drop **448** termination is provided jointly by HNU **450** unit mechanics and HNU **450** circuit board. HNU **450** hinged cover contains an integrated fusion splice tray where the fiber drop to the home is spliced into the HNU internal fiber loop. The HNU internal fiber loop is then terminated on the HNU circuit board.

HNU **450** provides all services on a single circuit card mounted in the housing. The HNU circuit board provides the WDM and electrical to optical conversion functions to extract the POTS and data signals from the 1310nm wavelength and the video signals from the 1550nm wavelength. In the upstream direction HNU **450** converts the electrical signals to optical signals and multiplexes the 1330nm and 1550nm wavelengths onto the fiber for transport back to the CO.

The POTS, video and Ethernet data are provided as connectorized outputs on the HNU **450** housing. Three RJ11 connectors are provided for connection to the house telephone wiring. Each connector provides a separate, private line. Two 'F' type connectors are provided for video feeds into the customer premise. One connector provides the CATV signal and the other provides the digital DBS signal. A single RJ45 connector is provided for a 10Base "_" T high-speed data connection to the customer's computer.

Voice traffic is received and transmitted in a packetized format by HNU **450.** HNU **450** provides the battery (optional external), ringing, supervision (off-hook/on-hook), and PCM coding of telephony BORSCHT functions for each POTS line. The resulting POTS line interfaces at the three RJ11 jacks on HNU **450** meet the requirements of TR-57, as applicable. The POTS line interfaces are also compatible with implementation of CLASS services.

Video signal **460** reception range is from 50 to 2050 MHz. The DBS signal **458** reception is 950-2050MHz. Standard DBS set top boxes will be used to decode the signals. CATV signal reception is 50-750MHz.

The HNU CATV interface (coax 'F' connector) complies with NTSC standards and provides 25 analog channels and 140 digitally-modulated channels of programming. The HNU DBS interface (coax F connector) complies with the Hughes DBS standard for the provision of a full range of DBS channels.

HNU data traffic is received and transmitted as Ethernet packets using Point-to-Point Protocol over Ethernet (PPPoE). The 10Base "_" T interface provided at HNU **450** is IEEE 802.3 compliant. The HNU 10Base-T interface is connected to a standard Network Interface Card (NIC) installed in the customer's computer over CAT-3 or CAT-5 cabling in the home. The PPPoE session is initiated at the customer's computer and terminated by the ISP provider. The high-speed data service downstream performance is 20Mbps shared among four homes connected at Passive Optical Splitter **446** with downstream burst capability of 10Mbps to each home. The upstream performance is 4.5Mbps dedicated for each home. All four of the homes linked to Passive Optical Splitter **446** have the ability to conduct simultaneous 4.5Mbps data sessions.

HNU **450** executes power shedding during an AC power outage to automatically shut down video and data services to conserve battery power.

### C. Central Office (CO) Equipment

An exemplary CO consists of Splitter WDM Frame (SWX) **430,** fiber amplifiers and transmitters **438**, high power optical amplifier (FOA) **434,** and voice and data distribution center **420.** The Splitter WDM Frame (SWX) **430** assembly collects the feeder network fibers from the HNUs **450** via the CO cable vault. The SWX shelf **430** subassembly is a passive optical signal distribution system that provides mass fusion termination of up to 96 of these fibers to fiber jumpers routed to the DISC*S® MX MDS 20F shelf. The SWX **430** also performs the WDM function to separate the 1310nm signals (voice/data) from the 1550nm signals (video) onto separate fibers within the CO. A single fiber carrying 1550nm video signals is routed to the Optical Video Distribution equipment **438.** Fibers carrying 1310nm voice/data signals from all the HNUs 50 (4 per fiber) are routed to voice and data distribution center **420.** SWX **430** also provides multiplexing of a 1550nm video broadcast signal from a single fiber to 32 outgoing fibers.

The CATV and DBS signals **440, 442** entering the CO from the service provider head-end and satellite are received at the E/O **438,** which combines both signals into a 1550nm signal carried over a single fiber. This combined optical video signal is then amplified by a high power optical amplifier (FOA) **438** that acts as the "booster" stage in the CO Optical Video Distribution subsystem. The output of the booster FOA is fed to an optical splitter (not shown) that fans out the combined optical video signal to multiple parallel FOAs that act as the distribution amplifier stages. The number of distribution FOAs is a function of the number of fibers in the network. The output of the distribution FOA is routed over fiber to an SWX(s) **430.** An example of an FOA is an Erbium-Doped Fiber Amplifier (EDFA), although other types of optical amplifiers could be used with the invention.

The fibers carrying voice and data signals over 1310nm are routed from SWX **430** to a MX MDS shelf contained in voice and data distribution center **420.** The fibers are connected directly to the QOIU81 (Quad Optical Interface Unit) cards **420A** in the MDS shelf. Each QOIU81 in voice and data distribution center **420** accepts four fibers, where each fiber is carrying voice and data for four of HNUs **450.** There are fourteen QOIU81 slots available in the MDS shelf, therefore each MDS shelf supports 224 HNUs (14 cards x 4 ports per card x 4 homes per port). Since each HNU **450** represents 3 POTS lines, the MDS shelf can distribute up to 672 POTS channels.

A QOIU81 card performs the optical to electrical conversion for four optical signals. The voice data is removed from the data stream received from HNU **450** and routed to a structured DS-0 TDM bus on the MDS backplane. The TDM data is passed to a DPU1 (Data Processing Unit) where the TSI function local to the MDS backplane is performed. The TDM voice data is then passed to the DISC*S® Common shelf co-located in the same frame as the MDS shelf.

The DISC*S® Common Shelf performs call processing and provides a TR-008 or GR-303 interface to the voice switch. The Common Shelf implements a non-blocking 672 x 672 channel Time Slot Interchanger. The Common Shelf implementation of GR-303 is fully compliant to Telcordia requirements and has been certified with all the major switch vendors' equipment. The GR-303 implementation includes flexible concentration.

The Common Shelf further includes a Fuse and Alarm Panel that monitors the MDS shelf as well as the Common Shelf elements. The Fuse and Alarm Panel includes 16 alarm contacts that can be used to monitor other equipment, such as the Optical Video Distribution equipment.

The 1310nm optical signals **428** received by the QOIU81 cards in the MDS shelf also include Ethernet data packets from HNUs **450.** In similar fashion to the voice traffic, the QOIU81 removes the data packets from the digital signals derived from optical to electrical conversion of the signals received from all four fibers terminated at the card. The QOIU81 multiplexes the Ethernet data packets onto a single 100Base "_" T output. The 100Base "_" T output carries data traffic from 16 homes consisting of up to 4 PPPoE sessions each. The 100Base "_" T signal from each QOIU81 is connected to an external Data Aggregation device over CAT-5 wiring in the CO.

The Data Aggregation device(s) aggregates the Ethernet traffic from the QOIU81s in voice and data distribution center **420.** The output of the Data Aggregation device is connected to the telephony service provider's Data Transmission Backbone **426**.

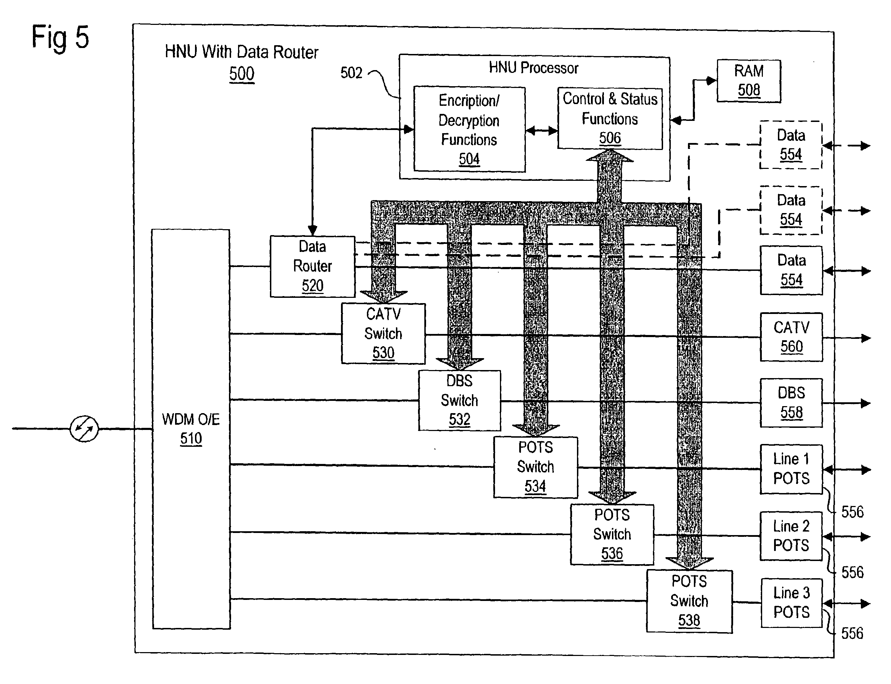

Turning now to **FIG. 5**, a diagram of an HNU is depicted which has been modified by the inclusion of a provisionable router in accordance with an exemplary embodiment of the present invention. HNU **500** contains WDM O/E **510** (wave division multiplexer optical to electrical) that functions identically to WDM O/E **452** discussed above with respect to **FIG. 4.** Thus, the optical signal is converted into a plurality of separate electrical signals for desperate media devices. These signals include up to three POTS **556** lines shown as lines 1, 2, and 3 for telephony services; DBS **558** for providing direct broadcast video services as discussed above; CATV **560** for providing cable video media services; and data channel **554** for providing 10BaseT. However, unlike HNU **450** shown in **FIG. 4** above, HNU **500** includes a provisionable data router and several media switches for provisioning media services to the customer. Provisionable data router **520** is actually a routing circuit or chip with embedded routing functionality, however, provisionable router **520** functions in a similar manner to process depicted above with respect to **FIG. 3.** Unlike the predecessor HNU, the HNU of the present invention allows for additional data ports to provide additional data signal connections to the customer. These are shown by the dashed lines coming from router **520** and depicted as data **554.** Data router **520** is also ported to HNU processor **502**. HNU processor **502** contains encryption/decryption functions **504** and control and status functions **506** and is further connected to sufficient RAM **508** to execute the onboard functionality. HNU processor **502** controls provisioning and status functionality of HNU **500** from control information sent via the Internet to HNU **500.** The control information include both provisioning and status requests from the service provider. Data router **520** routes customer packets to one of data **554** and provisioning and status request packets to HNU processor **502**. Once received, HNU **502** decrypts packets using encryption/decryption functions **504** and then control and status functionality **506** executes the requested operation.

Provisioning is accomplished by activating or deactivating any one of a plurality of media switched contained within HNU **500**. In accordance with an exemplary embodiment, these media switches are in the normally-off switches or contain normally-off switching logic as a base state. Thus, if the operation of the HNU processor is interrupted for any reason, the media switches will automatically return to the off position until re-provisioned by the service provider. These media switches include CATV switch **530,** DBS switch **532,** and POTs switch **534, 536** and **538** for controlling POTs lines. Data router **520** routes data to one of three data ports, data **554** and provides the means for provisioning, monitoring or troubleshooting and collecting performance data.

HNU **500'**s provisioning, monitoring, troubleshooting and performance collection capabilities are accessed using a web browser via an HTTP or similar protocol web page at the CO. HNU **500** may also autonomously provide the service provider with status reports by using control and status functions **506.** In normal operation HNU processor **502** accumulates status information, encrypts the status information using encryption/decryption functions **504,** addresses a data packet containing the status function to the service provider and router **520** transmits the status information to the CO using any connected WAN (of course, here it is expected the WAN is the Internet). This feature greatly improves service quality for the service provider, especially involving customers with very little or no technical expertise. Once a service provider's help desk receives a trouble call from a customer, the helper can merely access the status log for the customer's particular HNU for a basis to begin the troubleshooting. Additionally, the help representative can initiate status requests from the HNU and initiate on-board trouble-shooting and diagnostics for evaluating the customer's problem with a web browser.

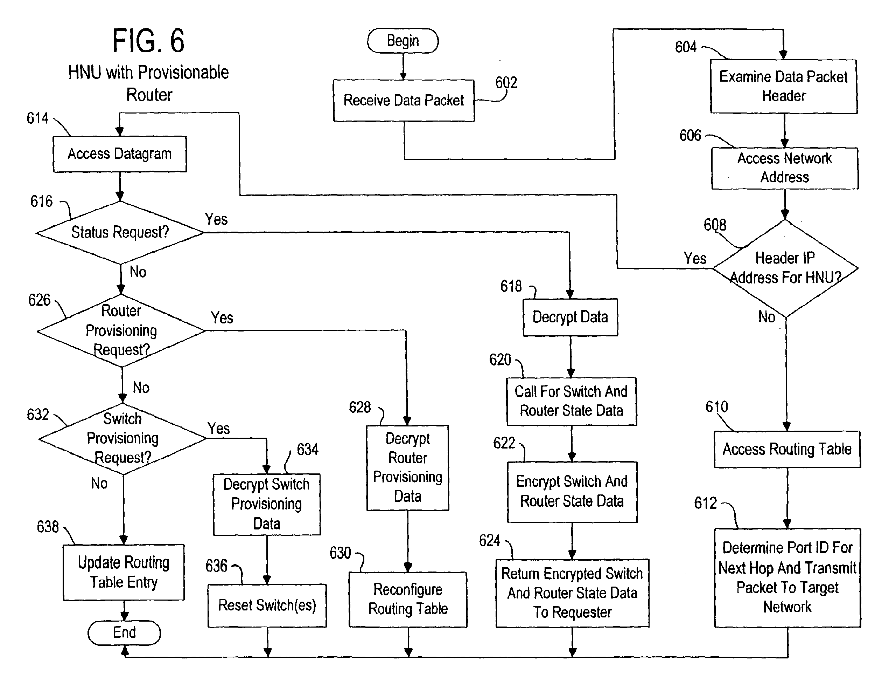

With reference to **FIG. 6,** a flowchart depicting packet handling by a remote provisioning HNU is illustrated in accordance with an exemplary embodiment of the present invention. The process begins with the HNU receiving a data packet (step **602**). At this point, it is assumed that the WDM O/E has converted the optical information to electrical information and the data is actually being received in the data router. The router then examines the data packet header (step **604**) and accesses the network address contained within the packet header (step **606**). The router then determines whether the IP address contained in the header defines the HNU (step **608**). If not, it is assumed that the packet is to be routed to one of the data ports on the HNU. The router then determine whether the network address is listed on the routing table (step **609**). If not the process ends without the packet being routed. If the address is listed in the routing table, the router identifies the data port associated with the network (step **610**). The router then transmits the packet to the target networks over the identified port (step **612**). The process then ends with respect to routing a customer data packet.

Returning to step **608**, if the router determines that the packet header contains the IP address of the HNU, the router accesses the datagram (step **614**). Depending on the type of request information contained in the datagram, the data router either processes the request internally or passes the information to the HNU processor for processing. Thus, a series of checks are made on the data packet to identify the type of request being received at the data router. The first check is to determine if the packet contains a status request (step **616**). If so, the packet is passed to the HNU processor which decrypts the request information (step **618**). The HNU processor then calls for switch and router state information from the various onboard components of the HNU (step **620**). Having received the switch and state information, the processor then compiles and encrypts a status report which is passed to the router (step **622**). Finally, the router returns the encrypted switch and router state information to the requestor based on the source IP address contained in the header of the request packet (step **624**). The process then ends.

Returning to step **616**, if the information in the data packet cannot be identified as a status request, a check is made to determine if the information contains a router provisioning request (step **626**). If so, the router provisioning information is decrypted (step **628**). The router may, itself, contain onboard encryption/decrypting functionality or more likely rely on the HNU processor for decryption functions. In the latter case, once the router identifies the packet as containing a provisioning request, the packet's contents are sent to the HNU processor for decryption and the decrypted request returned to the data router for processing. Regardless of which element decrypts the packet, the data router reconfigures the routing table based on the provisioning preference information contained in the provisioning request (step **630**). The process then ends.

Returning again to step **626**, if the data packet does not contain a router provisioning request, a check is made to determine if the data packet contains a media switch provisioning request (step **632**). Remembering from **FIG. 5** that data router **520** provisions media data **555** while a plurality of media switches **530-538** provision other media types with respect to HNU **500.** Therefore, if it is determined in step **632** that the data packet contains a switch provisioning request, the packet is then transferred to the HNU processor which decrypts the switch-provisioning request (step **634**). The HNU processor then resets the switch(es) based on the provisioning request (step **636**). The process then ends with respect to the switch-provisioning request.

Returning to step **632,** if the data packet does not contain either a status request, a router-provisioning request, or a switch provisioning request, then the packet must contain routing information from routing protocol for configuring hops between nodes. In that case, the data router updates the routing table entry based on the hop information in the routing packet (step **638**) and the process ends. At this point, any data packet transferred to the HNU via a WAN such as the Internet has been processed.

The Ethernet frame layout specified by the DIX (DEC-Intel-Xerox) standard contains a type field, as can be seen in Table II below. The type field contains a type number that describes the type of high-level network protocol (such as TCP/IP) being carried by the Ethernet frame. In the newer IEEE 802.3 frame specification, the type field was replaced by a more general, but more complex, set of frame specifiers. Nevertheless, many network software implementations still use the DIX frame specification, and its Ethernet type field. For further registering an Ethernet type contact: IEEE Registration Authority, IEEE Standards Department 445 Hoes Lane, P.O. Box 1331 Piscataway NJ 08844-1331. Thus, in another exemplary embodiment of the present invention, data packets are routed (switched is the more accurate term for a MAC level routing operation) by network type as designated in the "Ethernet Type" packet field.

**Table II**

| (Ethernet II Frame Layout) | | | | | | |
|---|---|---|---|---|---|---|
| 8 Bytes Preamble | 6 Bytes Destination MAC Address | 6 Bytes Source MAC Address | 2 Bytes Ethernet Type | 46-1500 Bytes Data | 6 Bytes Destination MAC Address | 2 Bytes CRC/FCS |

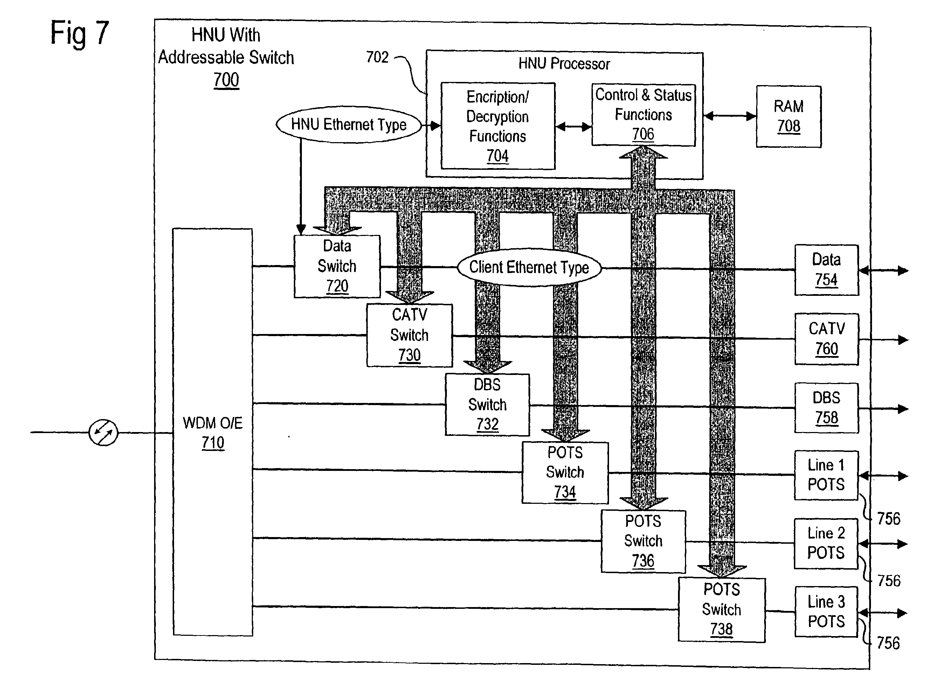

In an alternative exemplary embodiment, the HNU may contain a network data switch rather than a data router for processing provisioning in status requests and for provisioning media data from the HNU. **FIG. 7** is a diagram depicting an HNU utilizing an addressable network switch for processing provisioning and status requests in accordance with an exemplary embodiment of the present invention. Here, HNU **700** contains WDM O/E **710** for converting the optical signal to a plurality of electrical media signals based on the bandwidth contained within the optical signal. Each media signal is then routed through a media switch. For instance, data switch **720**, CATV **730,** DBS switch **732,** POTS switch **734,** POTS switch **736** and POTS switch **738**. Each of the data switches is connected to HNU processor **702** via a data bus in a similar fashion as HNU **500** shown in **FIG. 5.** However, rather than a data router routing signals to HNU processor **702** in a network level operation, the present embodiment utilizes network data switch **720** for switching data packets based on the packet's Ethernet type designation. A packet wrapped in a packet designated as an Ethernet type that is designated for the HNU is passed to HNU processor **702**. Conversely, data switch **702** switches data packets wrapped in a client's Ethernet type to data port **754**. Therefore, in this embodiment HNU **700** receives provisioning and status requests off the Internet similar to that described with respect to HNU **500** shown in **FIG. 5,** but in this case, rather than separating the data packets in a IP layer operation utilizing IP addresses, the data packets are separated by Ethernet types which is generally a data link or MAC level operation. HNU **700** may utilize a single IP address for all data packets as opposed to HNU **500, FIG. 5,** in which HNU **500** is expected to have one IP address and each of the data ports serviced by data router **520** may also maintains a separate IP address.

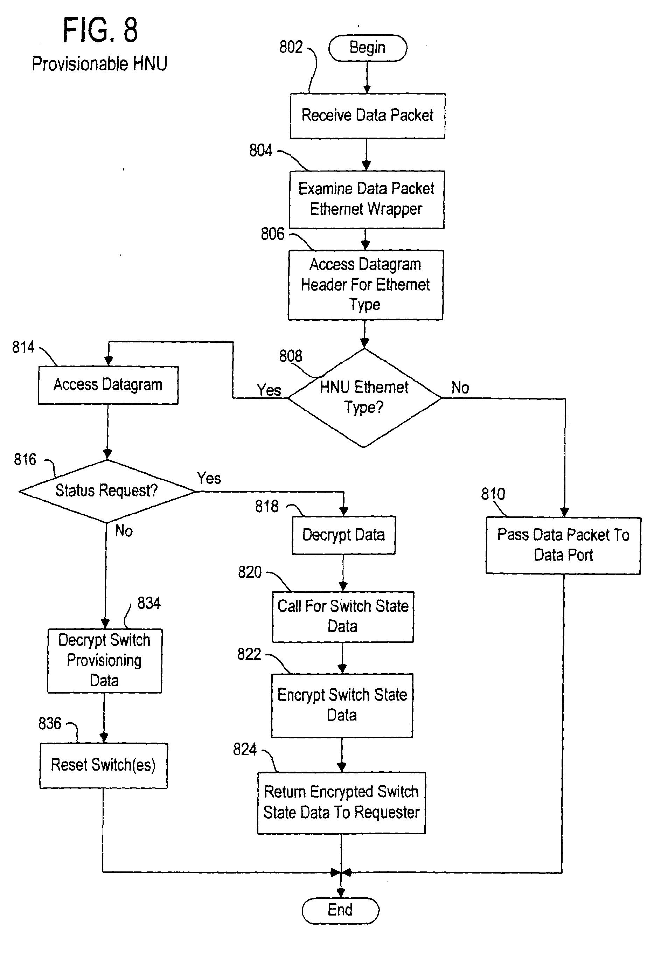

Turning now to **FIG. 8**, a flowchart depicts a process for processing data packets in an HNU in accordance with an exemplary embodiment of the present invention. The process begins with the HNU receiving a data packet (step **802**). The data packet is directed to the data switch by the ODM O/E where the switch examines the data packet Ethernet wrapper (step **804**). As one ordinarily skilled in the art would realize, packets of data are layered or wrapped in protocol layers or stacks. Once a packet is received by a device, it is unwrapped or the stack is popped in reverse order that it was loaded. At this point in the process, the packet has already been identified by its IP address as belonging or being addressed to the HNU and transferred to the data switch. After examining the data packet's Ethernet wrapper, the data switch accesses the datagram header for the Ethernet types (step **806**). This header identifies the Ethernet type protocol for handling the packet wrapped within. A decision is then made by the data switch as to whether the Ethernet type specified in the packet header is that of the HNU (step **808**). If it is determined not to be the HNU's Ethernet type, the data packet is passed to the data port for customer use (step **810**). At this point, the process ends with regard to the HNU processing data packets destined for customer use.

Returning to step **808**, if the data switch determines that the packet is of the HNU Ethernet type, the switch passes the datagram to the HNU processor which then accesses the datagram (step **814**). The HNU processor then must determine whether the datagram contains a status request or switch provision data. Thus, a check is made to determine whether the datagram contains a status request (step **816**). If the datagram contains a status request the HNU processor decrypts the datagram (step **818**), and calls each switch for state information (step **820**). Having received the state information from each switch in the HNU, the HNU processor then encrypts the switch state data (step **822**), and returns the encrypted switch data to the requestor via the data switch. The process for handling status request packet is then complete.

Returning again to step **816**, if the datagram does not contain a status request, the datagram must contain switch provisioning data. In that case, the HNU processor decrypts the switch provisioning request (step **834**) and utilizing the on-board data bus, resets media switches based on the switch-provisioning request (step **836**). The process then ends with respect to provisioning media switches.

The description of the present invention has been presented for purposes of illustration and description but is not intended to be exhaustive or limited to the invention in the form disclosed. Many modifications and variations will be apparent to those of ordinary skill in the art. The embodiment was chosen and described in order to best explain the principles of the invention and the practical application, and to enable others of ordinary skill in the art to understand the invention for various embodiments with various modifications as are suited to the particular use contemplated.

## Claims

1. A method for provisioning a media service using customer located equipment comprising:
receiving a signal on customer allocated media in a customer located device;
identifying the signal as either a customer destined signal or a device destined signal; and
provisioning at least one media based on the signal being identified as a device destined signal.

2. The method of claim 1, wherein the customer allocated media is one of a WAN (wide are network), LAN (local are network) or Internet.

3. The method of claim 1, wherein provisioning at least one media based on the signal being identified as a device destined signal further comprises:
ascertaining a media type to be provisioned from information contained in the data packet; and
resetting a switch, wherein the switch controls output of the ascertained media.

4. The method of claim 1, wherein identifying the signal as either a customer destined signal or a device destined signal further comprises:
determining an Ethernet type from information contained in the signal; and
classifying the Ethernet type as being one of a device Ethernet type and a customer Ethernet type.

5. The method of claim 4, wherein provisioning at least one media based on the signal being identified as a device destined is based on the signal being of the device Ethernet type.

6. The method of claim 1, wherein the device is one of a network switch, a router and an optical/electrical interface.

7. The method of claim 1, wherein the at least one media is one of data, video and telephony.

8. The method of claim 1, further comprises:
accumulated state information pertaining to the customer located device; and
transmitting the state information on customer allocated media to a remote location.

9. A method for monitoring customer located equipment comprising:
receiving a signal on customer allocated media in a customer located device;
identifying the signal as either a customer destined signal or a device destined signal;
responding to the signal based on the signal being identified as a device destined signal, wherein the response includes state information pertaining to the device.

10. The method of claim 1, wherein subsequent to identifying the signal as a device destined signal the method further comprises:
polling at least one component of the device for state information.

11. A customer located device for provisioning a media service comprising:
a first port, wherein the first port is capable of receiving media;
a second port, wherein the second port is capable of transmitting media;
a media switch connected between the first port and second port; and
a media switch controller connected between the first port and the switch.

12. The device of claim 11, wherein the device is one of a network switch, a router and an optical/electrical media interface unit.

13. The device of claim 11, wherein the media switch is a first media switch, the device further comprising:
a third port, wherein the third port is capable of transmitting media;
a second media switch connected between the first port and the third port and is further connected between the media controller and the third port.

14. The device of claim 11, wherein the first port is connect to one of a WAN (wide are network) and an Internet.

15. The device of claim 11, further comprises:
an optical/electrical interface connected between the first port and the first media switch.

16. The device of claim 11, wherein the media service is one of data, video and telephony.

17. The device of claim 11, further comprises:
a processor; and
RAM (random access memory).
